# EUROPEAN PATENT APPLICATION

(11) **EP 4 591 969 A1**
(43) Date of publication of application: **30.07.2025**
(21) Application number: 24154326.3
(22) Date of filing: 29.01.2024
(51) Int. Cl.: B01D 63/14

(54) **MEMBRANE ELEMENT FOR HUMIDIFIER AND HUMIDIFIER**

(71) Applicant: MANN+HUMMEL GmbH, 71636 Ludwigsburg (DE)
(72) Inventor: JAINEK, Herbert, 71636 Ludwigsburg (DE); TRAUTMANN, Pius, 71636 Ludwigsburg (DE); HELLER, Christina, 71636 Ludwigsburg (DE); RIEDINGER, Korbinian, 71636 Ludwigsburg (DE)
(74) Representative: Mann + Hummel Intellectual Property

(57) **Abstract**

A membrane element (10) for a humidifier (100) includes a zigzag-pleated membrane media bellows (12) including a membrane media (26), the membrane media bellows (12) extending in a circumferential direction (38) about a longitudinal axis (14), pleats (16) of the membrane media bellows (12) extending essentially parallel to the longitudinal axis (14), the membrane media bellows (12) further including inner pleat folds (20) at an inner circumference (18) and outer pleat folds (24) at an outer circumference (22), and the membrane media (26) including stacked grid layers (28, 30) and a semipermeable membrane (32) interposed between the stacked grid layers (28, 30). The membrane element (10) further includes a support body (40) including an outer wall (42) arranged at the inner circumference (18), at least part of an interior (44) of the support body (40) being fluid-tight.

## Description

### Technical Field

The invention relates to a membrane element for a humidifier, in particular for a fuel cell system, as well as a humidifier for a fuel cell system.

### Background Art

Humidifiers known in the art are used for example to humidify process gas for fuel cells which are operated with molecular hydrogen and/or oxygen or air for electricity generation. The process gases supplied to the fuel cell are for this reason usually set to a desired, stable humidity in a humidifier. A humidifier usually includes flow plates which are provided with channel structures, wherein the channels adjoin a water transfer medium, typically in the form of a semipermeable layer such as a water-transfer membrane. An assembly usually provides a plurality of flow plates, between which there are arranged water transfer membranes.

For example, on one side of a semipermeable layer a moist gas, e.g. an exhaust gas from the fuel cell, is guided through the channels of an adjacent flow plate, and on the opposite side of the semipermeable layer a dry gas, e.g. fresh air, is passed through channels of a second flow plate. In this case, the moist gas on one side of the semipermeable layer releases moisture to the semipermeable layer, while on the opposite side the semipermeable layer releases moisture to the dry gas.

### Summary

It is an object of the invention to provide an improved membrane element for a humidifier, in particular for a fuel cell system.

Another object is to provide an improved humidifier for a fuel cell system with such a membrane element.

According to an aspect of the invention the object is achieved by a membrane element for a humidifier, in particular for a fuel cell system, the membrane element including a zigzag-pleated membrane media bellows including a membrane media, the membrane media bellows extending in a circumferential direction about a longitudinal axis, pleats of the membrane media bellows extending essentially parallel to the longitudinal axis, the membrane media bellows further including inner pleat folds at an inner circumference and outer pleat folds at an outer circumference, and the membrane media including stacked grid layers and a semipermeable membrane interposed between the stacked grid layers, and a support body including an outer wall arranged at the inner circumference, and at least part of an interior of the support body being fluid-tight, and the support body further including a support body inlet at one end, a support body outlet at an opposing end, and fluid-permeable passages arranged circumferentially in the outer wall at both the one end and the opposing end.

According to another aspect of the invention the further object is achieved by a humidifier for the fuel cell system, the humidifier including a housing including an inlet for a first fluid, in particular an exhaust gas of the fuel cell system, an inlet for a second fluid, in particular a supply air of the fuel cell system, an outlet for the first fluid and an outlet for the second fluid, and the membrane element, the membrane element being arranged inside the housing. At least parts of an outer circumference of the membrane media bellows are fluidly connected to the inlet for the second fluid and the outlet for the second fluid, the support body inlet is fluidly connected to the inlet for the first fluid. and the support body outlet is fluidly connected to the outlet for the first fluid.

Advantageous embodiments are described in the dependent claims, the description and the drawings.

The proposed membrane element for a humidifier, in particular for a fuel cell system, enables optimizing a degree of efficiency of the fuel system. It favors a round design of the membrane element with folded membrane and applied folds. Application in a humidifier includes diffusion of a moist medium from one side of the membrane to the other side. Moisture is diffusing through the membrane but not the gases.

Advantageously, the pleats of the membrane media bellows may be bent in crescent-shape manner in order to minimize the leakage path along the pleat folds. Thus, a space-saving compact design of a humidifier is enabled.

The grid layers of the membrane media separated by the membrane serve for ensuring a certain distance between different membranes in order to separate moist and dry gas flows and to enable an efficient moisture transfer through the membrane. Instead of the grid layers, which can be of different quality, it is also conceivable to apply spacer beads to the membrane or to pleat the membrane.

Despite, support grids are possible which generate turbulence in order to achieve an optimum water exchange. Instead of support grids as grid layers, individual prefabricated spacers could also be placed between the pleats of the membrane media. The support grids or spacers may be folded at the same time as the membrane media.

According to a favorable embodiment of the membrane element, the fluid-permeable passages may be fluidly connected to the support body inlet and the support body outlet. Thus, the moist gas may flow on one side of the membrane media bellows and enables moist transfer through the membrane to the dry gas which is flowing on the other side of the membrane media bellows.

According to a favorable embodiment of the membrane element, the support body inlet and/or the support body outlet may include a diffusor directing outwards from the support body along the longitudinal axis and closing the interior of the support body. By this way, the wet gas may be directed in an advantageous manner to the fluid-permeable passages in the outer wall of the support body.

According to a favorable embodiment of the membrane element, the membrane element may further include a fluid-tight sleeve (34) and/or a fluid-tight sealing material covering at least partially the outer circumference of the membrane media bellows along an axial extension of the membrane media bellows. Advantageously, a forced gas flow through pleats on the outer circumference of the membrane media bellows for favorable moist transfer to the dry gas may be achieved. As a fluid-tight sealing material e.g. a thread wrap, a plastic tape, or a hot melt may advantageously be used.

According to a favorable embodiment of the membrane element, the membrane media bellows may include M-shaped pleats extending essentially parallel to the longitudinal axis and radially outward, and at least each second one of inner pleat folds may lie on the inner circumference. Thus, pleat folds on the outer circumference of the membrane media bellows may be arranged more tightly to each other in order to improve the intended gas flow.

According to a favorable embodiment of the membrane element, the pleats may be bent along a radial direction, and may be configured in a crescent-shaped manner. Advantageously, a maximum number of membrane area may be arranged inside a humidifier housing for favorable moist transfer to the dry gas. Also, the pleats may be further apart so that air flows directly through a free space without contacting the bellows. In other words, there is no exchange along the membrane media.

According to a favorable embodiment of the membrane element, the membrane media bellows may include end bodies, in particular end caps, closing the membrane media bellows at axial ends in a fluid-tight manner, the end bodies may include central inner openings, and the support body may be engaged in the central inner openings. By this way, the axial ends of the membrane media bellows may be sealed in an advantageous manner. Despite, the membrane media bellows is mechanically stabilized for handling during storing, mounting and demounting processes.

According to a favorable embodiment of the membrane element, the membrane element may further include circumferential axial sealing elements around the central inner openings of the end bodies. Thus, the membrane media bellows may advantageously be sealed against the humidifier housing for optimized gas flow.

The proposed humidifier, in particular for a fuel cell system, enables optimizing a degree of efficiency of the fuel system. It favors a round design of the membrane element with folded membrane and applied folds. Diffusion of a moist medium from one side of the membrane to the other side is favorably possible. Moisture is diffusing through the membrane but not the gases.

Advantageously, the pleats of the membrane media bellows may be bent in crescent-shape manner in order to minimize the leakage path along the pleat folds. Thus, a space-saving compact design of the humidifier is enabled. Bent means equal spacing of layers of the membrane media in the pleat folds, resulting in less leakage flow. It would be different with a conventional round design with star folding; a distance between pleat folds is greater, and air can flow directly from inlet to outlet.

The grid layers of the membrane media separated by the membrane serve for ensuring a certain distance between different membranes in order to separate moist and dry gas flows and to enable an efficient moisture transfer through the membrane. The membrane may be interposed between the grid layers, and they may be zigzag-folded together. Instead of the grid layers, which can be of different quality, it is also conceivable to apply spacer beads to the membrane or to pleat the membrane.

Despite, support grids are possible which generate turbulence in order to achieve an optimum water exchange. Instead of support grids as grid layers, individual prefabricated spacers could also be placed between the pleats of the membrane media.

According to a favorable embodiment of the humidifier, the membrane element may further include circumferential axial sealing elements for sealing the membrane element against the housing, the circumferential axial sealing elements being arranged around central inner openings of end bodies of the membrane media bellows. Thus, a gas flow for advantageous moist transfer to the dry gas may be achieved.

According to a favorable embodiment of the humidifier, the humidifier may further include at least one circumferential sealing element for sealing at least part of the outer circumference of the membrane media bellows against a housing wall of the housing. Thus, a gas flow for advantageous moist transfer to the dry gas may be achieved.

According to a favorable embodiment of the humidifier, the humidifier may further include potting material arranged at a front side inside the housing, the potting material being for sealing at least one axial end of the membrane media bellows. In particular, the membrane media bellows may be connected to the housing at one axial end by the potting material, whereas the other axial end may be sealed by a housing cover of the housing. By this way, the membrane media bellows may be mounted directly to the humidifier housing and sealed against the housing. Thus, no additional sealing elements are necessary to control the intended gas flow for advantageous moist transfer to the dry gas.

According to a favorable embodiment of the humidifier, the inlet for the second fluid and/or the outlet for the second fluid may include a diffusor. By this way, the dry gas may be directed for advantageous entry between the pleats on the outer circumference of the membrane media bellows.

### Brief Description of Drawings

The present invention together with the above-mentioned and other objects and advantages may best be understood from the following detailed description of the embodiments, but not restricted to the embodiments.
Figure 1 is an isometric view of a humidifier for a fuel cell system according to an embodiment of the invention.
Figure 2 is a sectional view of the humidifier according to Fig. 1.
Figure 3 is a detailed sectional view of part of the humidifier according to Fig. 2.
Figure 4 is a cross-sectional view of the humidifier.
Figure 5 is another detailed sectional view of part of the humidifier.
Figure 6 is another detailed sectional view of part of the humidifier.
Figure 7 is another detailed sectional view of part of the humidifier.
Figure 8 is a sectional view of a humidifier for a fuel cell system according to a further embodiment of the invention.
Figure 9 is an isometric view of a membrane element for a humidifier, in particular for a fuel cell system, according to an embodiment of the invention.
Figure 10 is a side view of the membrane element according to Fig. 9.
Figure 11 is a cross-sectional view of the membrane element.
Figure 12 is a detailed cross-sectional view of the membrane element according to Fig. 11.
Figure 13 is a sectional view of the membrane element.
Figure 14 is a schematic cross-sectional view of a membrane media of the membrane element.
Figure 15 is a schematic cross-sectional view of M-shaped pleats of the membrane media bellows according to a further embodiment of the invention.

### Description of Embodiments

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

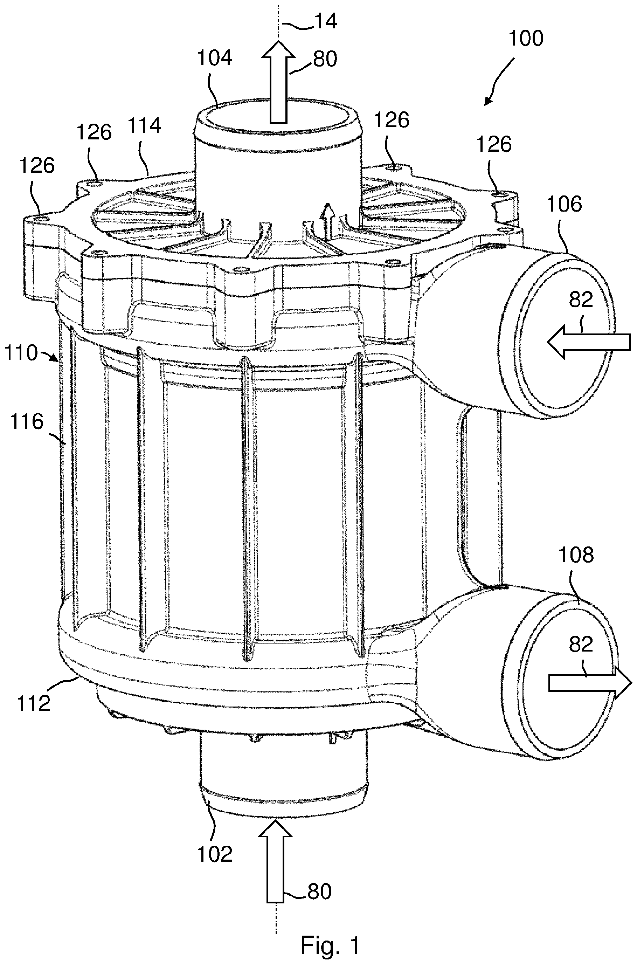

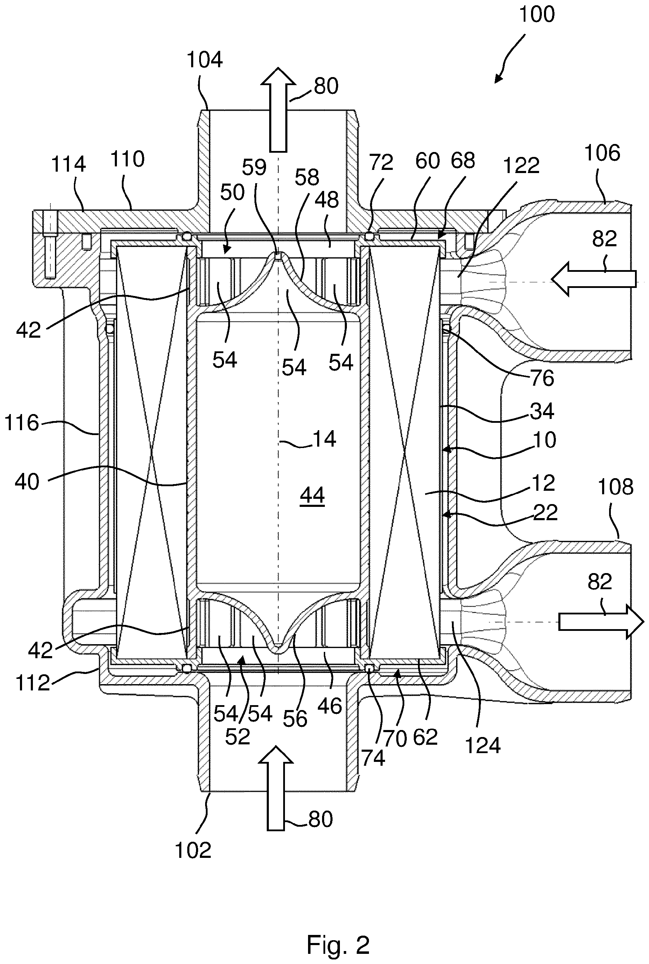

Figure 1 an isometric view of a humidifier 100 for a fuel cell system according to an embodiment of the invention. Figure 2 depicts a sectional view of the humidifier 100 according to Figure 1.

The humidifier 100 includes a housing 110 with at least one inlet 102 for a first fluid 80, in particular an exhaust gas of the fuel cell system, an inlet 106 for a second fluid 82, in particular a supply air of the fuel cell system, an outlet 104 for the first fluid 80 and an outlet 108 for the second fluid 82. The directions of the gas flows 80, 82 are marked by arrows. The housing 110 includes a pot-like housing body 112, which is closed by a housing cover 114. The housing cover 114 is connected to the housing body 112 with various locking bolts 126.

As shown in the sectional view of the humidifier 100 in Figure 2, a membrane element 10 is arranged inside the humidifier housing 110. At least parts of an outer circumference 22 of a membrane media bellows 12 are fluidly connected to the inlet 106 for the second fluid 82 and the outlet 108 for the second fluid 82. A support body inlet 46 is fluidly connected to the inlet 102 for the first fluid 80 and a support body outlet 48 is fluidly connected to the outlet 104 for the first fluid 80.

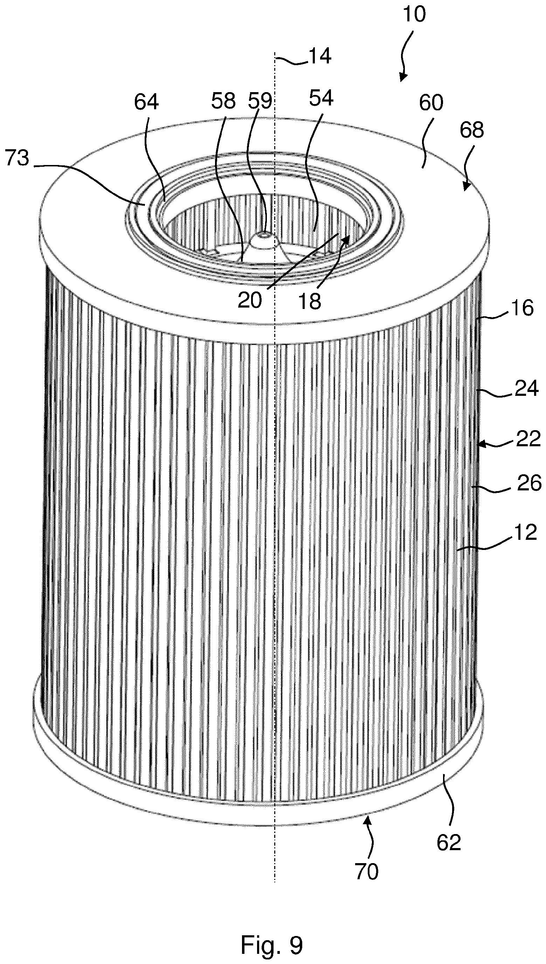

The membrane element 10, which may be seen and described in more details in Figures 9 to 13, includes a zigzag-pleated membrane media bellows 12 with a membrane media 26. The membrane media bellows 12 extends at least partially in a circumferential direction 38 about a longitudinal axis 14. Pleats 16 of the membrane media bellows 12 extend essentially parallel to the longitudinal axis 14. The membrane media bellows 12 includes inner pleat folds 20 at an inner circumference 18 and outer pleat folds 24 at an outer circumference 22.

The membrane media 26 includes at least two stacked grid layers 28, 30 separated by a semipermeable membrane 32, in particular a moisture-permeable membrane.

A support body 40 with an outer wall 42 is arranged at the inner circumference 18 of the membrane media bellows 12. Part of an interior 44 of the support body 40 is fluid-tight. The support body 40 further includes a support body inlet 46 at one end 50 and a support body outlet 48 at the opposing end 52. Fluid-permeable passages 54 are arranged circumferentially in the outer wall 42 at both ends 50, 52 of the support body 40, being fluidly connected to the support body inlet 46 and the support body outlet 48.

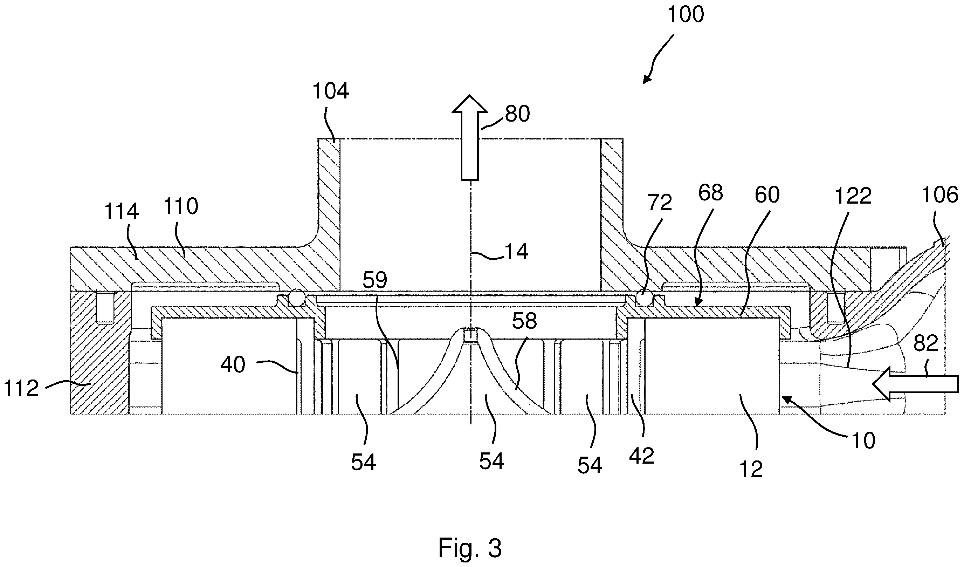

Figure 3 depicts a detailed sectional view of part of the humidifier 100 according to Figure 2. In particular, the upper part of the humidifier 100 with the inlet 106 for the second gas 82 and the outlet 104 of the first gas 80 and the sealing of the membrane element 10 to the housing 110 may be seen.

The membrane element 10 is sealed against the housing 110 by circumferential axial sealing elements 72, 74 arranged around central openings 64, 66 of end bodies 60, 62 of the membrane media bellows 12.

At least part of the outer circumference 22 of the membrane media bellows 12 is sealed against a housing wall 116 of the housing 110 by at least one circumferential sealing element 76 at the outer circumference 22.

The inlet 106 for the second fluid 82 and/or the outlet 108 for the second fluid 82 are configured with a diffusor 122, 124 in order to diffuse the incoming dry gas in an advantageous way to the outer circumference 22 of the membrane media bellows 12.

The support body inlet 46 and/or the support body outlet 48 are also configured with a diffusor 56, 58 directing outwards of the support body 40 along the longitudinal axis 14 and being arranged closing the interior 44 of the support body 40. The second diffusor 58 exhibits a channel 59 at the tip due to manufacturing conditions. This channel 59 may advantageously be closed for operation of the membrane element 10.

The outer circumference 22 of the membrane media bellows 12 may be covered at least partly along the axial extension of the membrane media bellows 12 by a fluid-tight sleeve 34 and/or by a fluid-tight sealing material. Thus, the second gas 82 may enter the membrane media bellows 12 from the inlet 106 on the upper region of the membrane media bellows 12, flow between the pleats of the membrane media bellows 12 downwards and exit the membrane media bellows 12 at the lower part of the membrane media bellows 12 towards the outlet 108.

The membrane media bellows 12 is provided with end bodies 60, 62, in particular end caps, closing the membrane media bellows 12 at axial ends 68, 70 in a fluid-tight manner. The end bodies 60, 62 include central inner openings 64, 66, wherein the support body 40 is engaged in the central openings 64, 66 of the end bodies 60, 62.

The central openings 64, 66 of the end bodies 60, 62 are provided with circumferential axial sealing elements 72, 74.

Advantageously, for manufacturing of the membrane element 10, following steps may be carried out. First the membrane media 26 with the grid layers 28, 30 on both sides of the membrane 32 may be flat folded. Then the flat folded membrane media 26 may be joined to form an annular membrane media bellows 12. The support body 40 with gas passages 54 may be inserted into the bellows 12. The bellows 12 may be compressed so that the folded layers lie against each other in a crescent shape. A sleeve 34 may be put on the bellows 12 or some sealing material may be applied to the outer circumference 22.

Then the manufactured membrane element 10 may be inserted into the humidifier housing 110 in a way to form a seal against the housing 110. For this purpose, a membrane element 10 with end bodies 60, 62 may be used providing sealing elements 72, 74, 76 for sealing the membrane element against the housing 110. Alternatively, a membrane media bellows 12 without end bodies 60, 62 may be inserted into the housing body 112, wherein some potting material 120 may be provided inside the housing body 112 for sealing the membrane media bellows 12 at the front side 70 as well as the whole membrane element 10. At the other front side 68 the membrane media bellows 12 may be sealed by the housing cover 114.

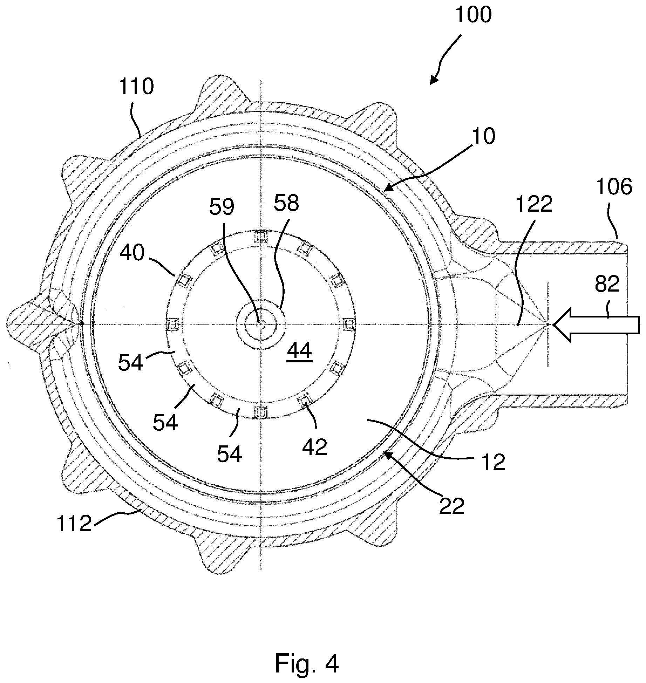

Figure 4 depicts a cross-sectional view of the humidifier 100.

The inlet 106 for the second gas 82 is to be seen where the gas 82 may flow around the outer circumference 22. Thus the gas 82 may enter the pleats 16 of the membrane media bellows 12.

The interior 44 of the support body 40 is to be seen with part of the diffusor 58. The regular distribution of the passages 54 in the outer wall 42 of the support body 40 is also recognizable, where the first gas 80 may enter the other side of the pleats 16 of the membrane media bellows 12.

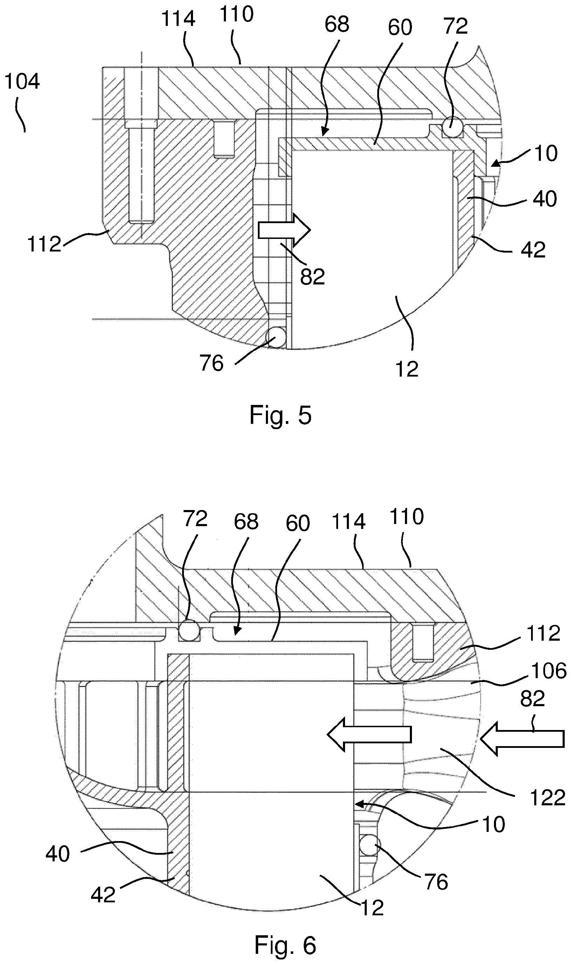

Figure 5 shows another detailed sectional view of part of the humidifier 100. Here the axial sealing element 72 for sealing the region of the second gas 82 between the membrane element 10 and the housing 110 is to be seen. Also entering of the second gas 82 flowing around the outer circumference 22 of the membrane media bellows 12 radially inwards into the membrane media bellows 12 is depicted.

Figure 6 shows another detailed sectional view of part of the humidifier. Here the other side of the membrane element 10 is to be seen where the second gas 82 enters the housing 110 for flowing partly in a direct flow into the membrane media bellows 12 and also flowing around the outer circumference 22 of the membrane media bellows 12 for entering the membrane media bellows 12 radially inwards from the outer circumference 22.

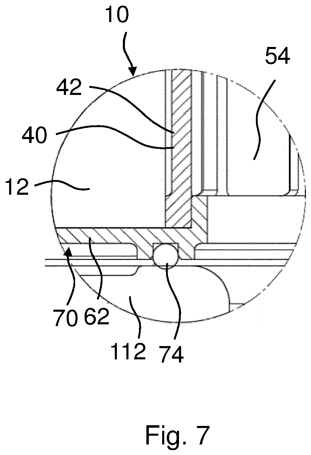

Figure 7 depicts another detailed sectional view of part of the humidifier. Here the further axial sealing element 74 for sealing the bottom side of the membrane media bellows 12 against the housing body 112 is to be seen.

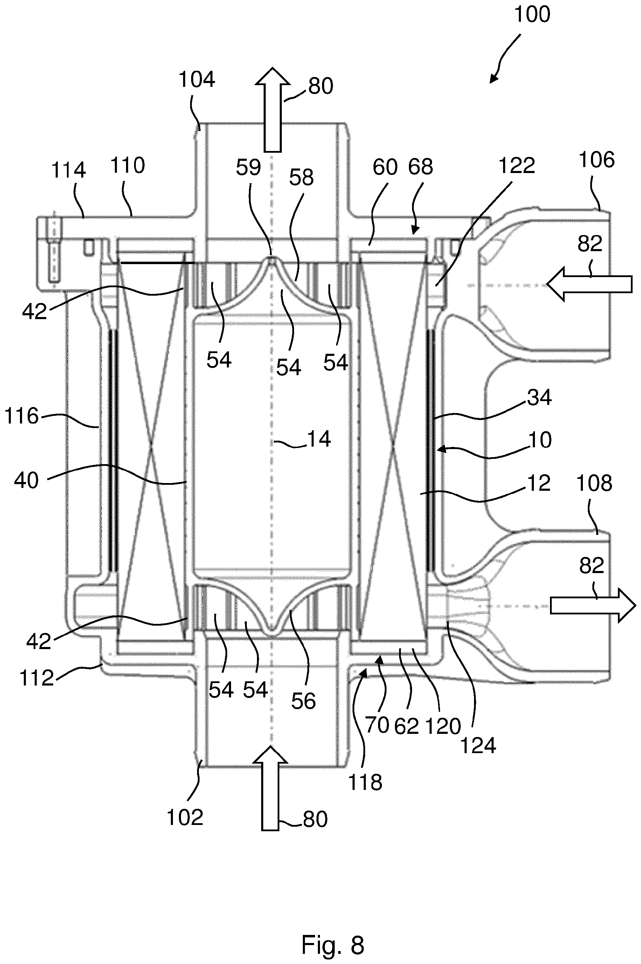

Figure 8 depicts a sectional view of a humidifier for a fuel cell system according to a further embodiment of the invention.

In this embodiment the membrane element 10 is mounted directly to the housing 110 of the humidifier 100 and sealed directly to the housing 110. At least one axial end 68, 70, in this embodiment the lower axial end 70, of the membrane media bellows 12 is sealed by potting material 120 arranged at a front side 118 inside the housing 110. Thus, the membrane media bellows 12 is connected to the housing 110 at the axial end 70 by the potting material 120. The other axial end 68 may be sealed by the housing cover 114 of the housing 110. Optionally, the other axial end 68 may also be provided with potting material 120 in order to seal the axial end 68 of the membrane media bellows 12. Potting material 120 may be some elastomer or lacquer or the like.

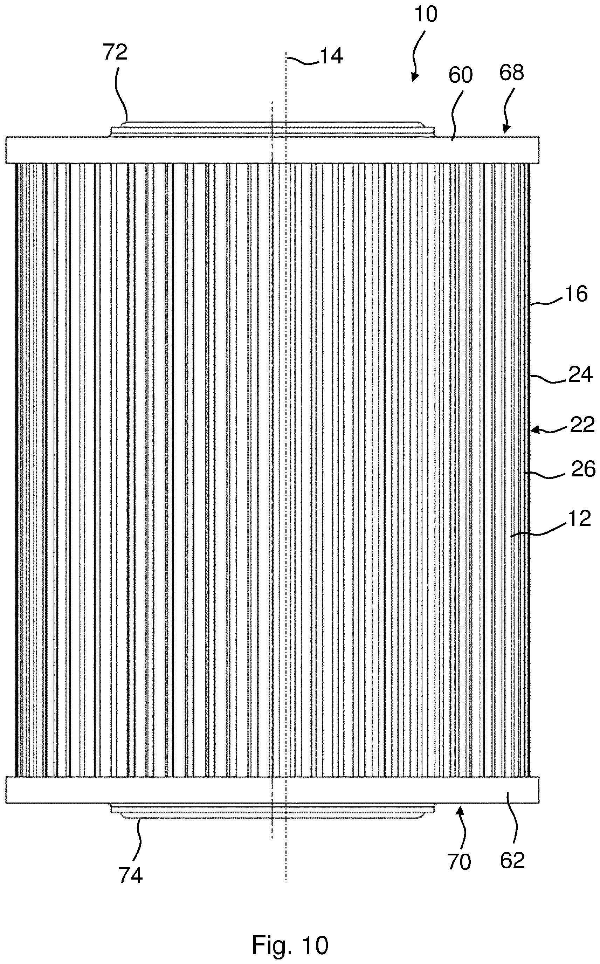

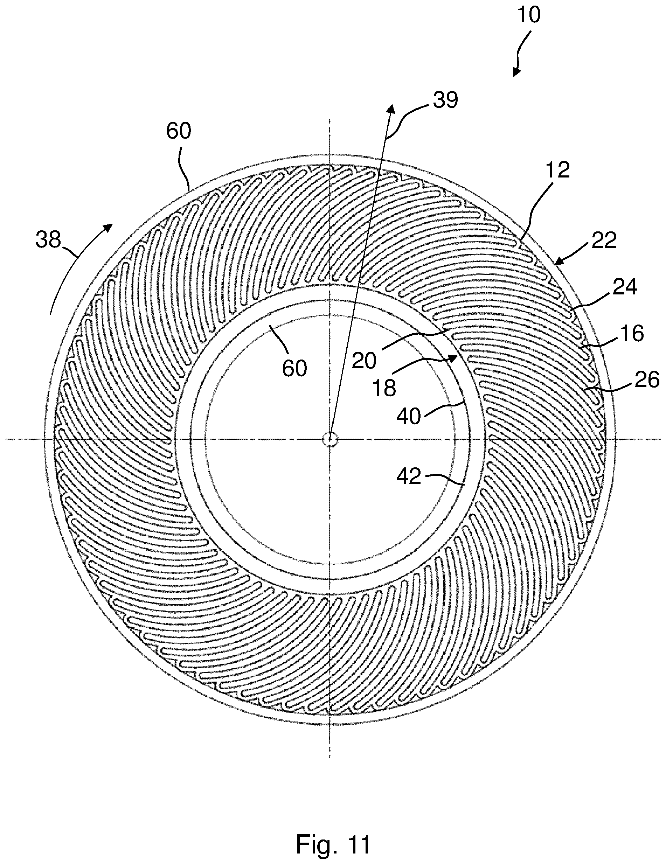

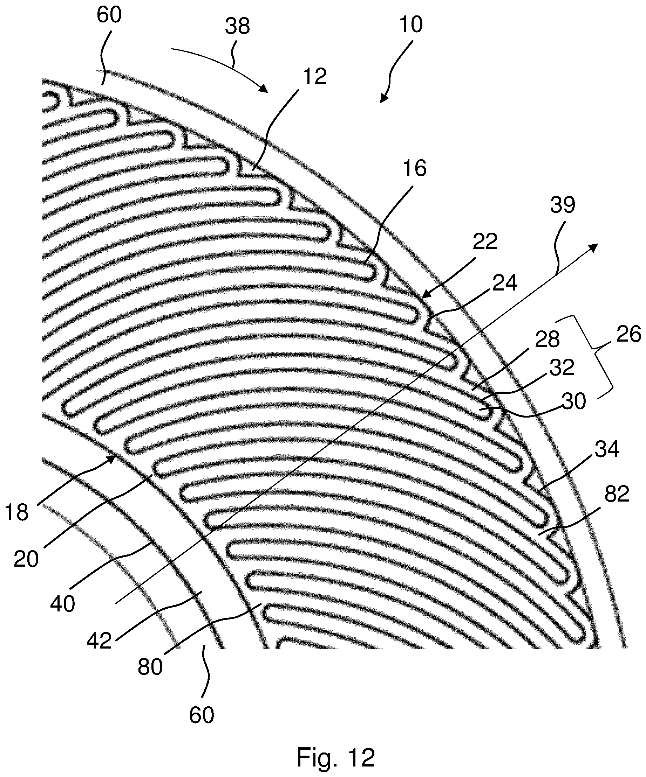

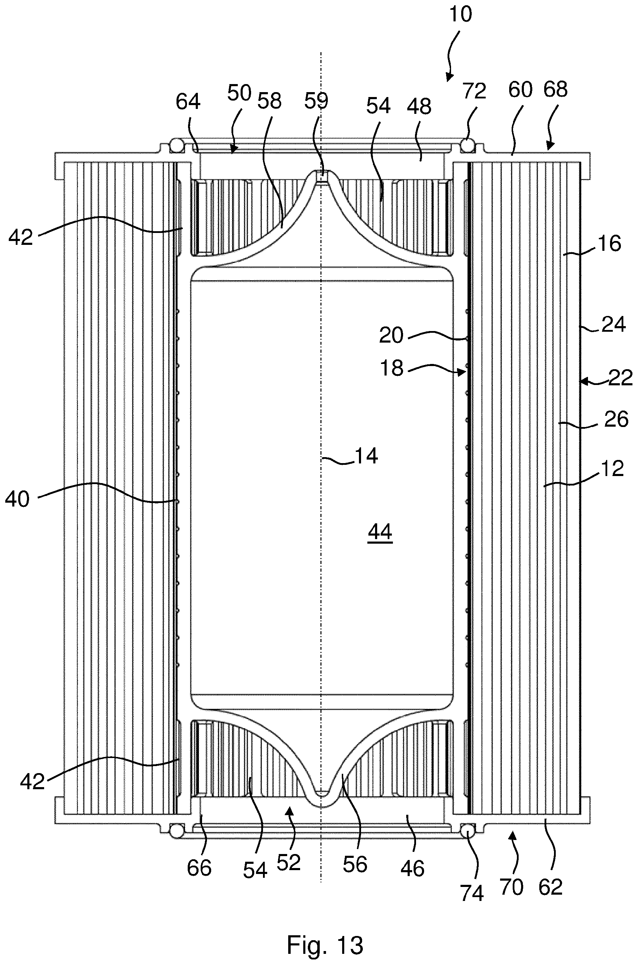

Figure 9 depicts an isometric view of a membrane element 10 for a humidifier 100, in particular for a fuel cell system, according to an embodiment of the invention. Figure 10 depicts a side view of the membrane element 10 whereas in Figure 11 a cross-sectional view of the membrane element 10 is shown with a detailed cross-sectional view in Figure 12. Figure 13 shows a sectional view of the membrane element 10.

The membrane element 10 includes the zigzag-pleated membrane media bellows 12 with the membrane media 26. The membrane media bellows 12 extends at least partially in the circumferential direction 38 about a longitudinal axis 14. Pleats 16 of the membrane media bellows 12 extend essentially parallel to the longitudinal axis 14. As is to be seen in Figures 11 and 12, the membrane media bellows 12 includes inner pleat folds 20 at an inner circumference 18 and outer pleat folds 24 at an outer circumference 22.

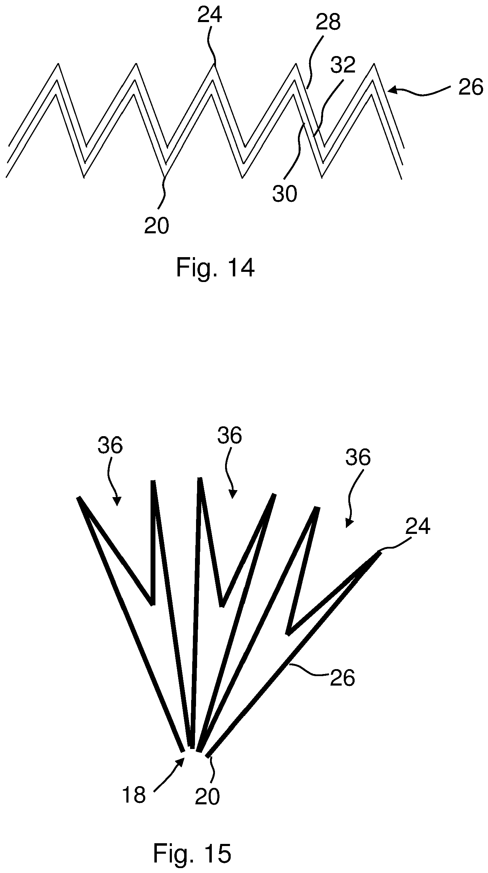

As is to be recognized from Figure 14, where a schematic cross-sectional view of a membrane media 26 of the membrane element 10 is shown, the membrane media 26 includes at least two stacked grid layers 28, 30 separated by a semipermeable membrane 32, in particular a moisture-permeable membrane.

The support body 40 with the outer wall 42 is arranged at the inner circumference 18 of the membrane media bellows 12.

As is to be seen in Figure 13, part of the interior 44 of the support body 40 is fluid-tight. The support body 40 further includes the support body inlet 46 at one end 50 and the support body outlet 48 at the opposing end 52. Fluid-permeable passages 54 are arranged circumferentially in the outer wall 42 at both ends 50, 52 of the support body 40, being fluidly connected to the support body inlet 46 and the support body outlet 48.

Axial sealing elements 72, 74 are located surrounding the central openings 64, 66 of the end bodies 60, 62. In Figure 9 the groove 73 for receiving the sealing element 72 is to be seen.

The shape of the pleats 16 of the membrane media bellows 12 is clearly to be seen in Figures 11 and 12. The pleats 16 are bent along the radial direction 39 following the circumferential direction 38. By this way, the pleats 16 are configured in a crescent-shaped manner. Thus, a very compact design of the membrane element 10 as well as of the humidifier housing 110 may be achieved.

Particularly in Figure 12, the design of the membrane media 26 and the membrane media bellows 12 is shown. The membrane 32 itself is sketched as the black lines, the grid layers 28, 30 are the white spaces surrounding the membrane 32. A sleeve 34 may advantageously cover the outer pleat folds 24 partly parallel to the longitudinal axis 14. Instead of a sleeve 34, e.g. a thread wrap, a plastic tape, or a hot melt may advantageously be used as a fluid-tight sealing material on the outer circumference 22.

Passages of the first gas 80 and the second gas 82 are marked for better understanding by the reference signs in the area of the grid layers 28, 30.

Figure 15 depicts a schematic cross-sectional view of M-shaped pleats 36 of the membrane media bellows 12 according to a further embodiment of the invention.

The membrane media bellows 12 may also be provided with M-shaped pleats 36, extending essentially parallel to the longitudinal axis 14 and radially outward. In this case, at least each second inner pleat fold 20 lies on the inner circumference 18. Thus, pleat folds 24 on the outer circumference 22 of the membrane media bellows 12 may be arranged more tightly to each other in order to improve the intended gas flow.

### Reference Signs List

- 10: membrane element
- 12: membrane media bellows
- 14: longitudinal axis
- 16: pleat
- 18: inner circumference
- 20: inner pleat fold
- 22: outer circumference
- 24: outer pleat fold
- 26: membrane media
- 28: grid layer
- 30: grid layer
- 32: membrane
- 34: sleeve
- 36: M-shaped pleat
- 38: circumferential direction
- 39: radial direction
- 40: support body
- 42: outer wall
- 44: interior
- 46: support body inlet
- 48: support body outlet
- 50: end
- 52: end
- 54: passage
- 56: diffusor
- 58: diffusor
- 59: channel
- 60: end body
- 62: end body
- 64: opening
- 66: opening
- 68: axial end
- 70: axial end
- 72: sealing element
- 73: sealing groove
- 74: sealing element
- 76: sealing element
- 80: first fluid
- 82: second fluid
- 100: humidifier
- 102: inlet first fluid
- 104: outlet first fluid
- 106: inlet second fluid
- 108: outlet second fluid
- 110: housing
- 112: housing body
- 114: housing cover
- 116: housing wall
- 118: front side
- 120: potting material
- 122: diffusor
- 124: diffusor
- 126: locking bolt

## Claims

1. A membrane element (10) for a humidifier (100), in particular for a fuel cell system, the membrane element (10) comprising
a zigzag-pleated membrane media bellows (12) comprising a membrane media (26), the membrane media bellows (12) extending in a circumferential direction (38) about a longitudinal axis (14), pleats (16) of the membrane media bellows (12) extending essentially parallel to the longitudinal axis (14), the membrane media bellows (12) further comprising inner pleat folds (20) at an inner circumference (18) and outer pleat folds (24) at an outer circumference (22), and the membrane media (26) comprising stacked grid layers (28, 30) and a semipermeable membrane (32) interposed between the stacked grid layers (28, 30); and
a support body (40) comprising an outer wall (42) arranged at the inner circumference (18), at least part of an interior (44) of the support body (40) being fluid-tight, and the support body (40) further comprising a support body inlet (46) at one end (50), a support body outlet (48) at an opposing end (52), and fluid-permeable passages (54) arranged circumferentially in the outer wall (42) at both the one end and the opposing end (50, 52).

2. The membrane element (10) according to claim 1, wherein the fluid-permeable passages (54) are fluidly connected to the support body inlet (46) and the support body outlet (48).

3. The membrane element (10) according to claim 1 or 2, wherein the support body inlet (46) and/or the support body outlet (48) comprise a diffusor (56, 58) directing outwards from the support body (40) along the longitudinal axis (14) and closing the interior (44) of the support body (40).

4. The membrane element (10) to any one of claims 1 to 3, further comprising a fluid-tight sleeve (34) and/or a fluid-tight sealing material covering at least partially the outer circumference (22) of the membrane media bellows (12) along an axial extension of the membrane media bellows (12).

5. The membrane element (10) according to any one of claims 1 to 4, wherein the membrane media bellows (12) comprises M-shaped pleats (36) extending essentially parallel to the longitudinal axis (14) and radially outward, and
wherein at least each second one of the inner pleat folds (20) lies on the inner circumference (18).

6. The membrane element (10) according to any one of claims 1 to 5, wherein the pleats (16) are bent along a radial direction (39) and are configured in a crescent-shaped manner.

7. The membrane element (10) according to any one of claims 1 to 6, wherein the membrane media bellows (12) comprises end bodies (60, 62) closing the membrane media bellows (12) at axial ends (68, 70) in a fluid-tight manner, and
wherein the end bodies (60, 62) comprise central inner openings (64, 66), and
wherein the support body (40) is engaged in the central inner openings (64, 66).

8. The membrane element (10) according to claim 7, further comprising circumferential axial sealing elements (72, 74) around the central inner openings (64, 66) of the end bodies (60, 62).

9. A humidifier (100) for a fuel cell system, the humidifier (100) comprising:
a housing (110) comprising an inlet (102) for a first fluid (80), in particular an exhaust gas of the fuel cell system, an inlet (106) for a second fluid (82), in particular a supply air of the fuel cell system, an outlet (104) for the first fluid (80), and an outlet (108) for the second fluid (82); and
the membrane element (10) according to any one of claims 1 to 8, the membrane element (10) being arranged inside the housing (110),
wherein at least parts of the outer circumference (22) of the membrane media bellows (12) are fluidly connected to the inlet (106) for the second fluid (82) and the outlet (108) for the second fluid (82),
wherein the support body inlet (46) is fluidly connected to the inlet (102) for the first fluid (80), and
wherein the support body outlet (48) is fluidly connected to the outlet (104) for the first fluid (80).

10. The humidifier (100) according to claim 9, wherein the membrane element (10) further comprises circumferential axial sealing elements (72, 74) for sealing the membrane element (10) against the housing (110), the circumferential axial sealing elements (72, 74) being arranged around central inner openings (64, 66) of end bodies (60, 62) of the membrane media bellows (12).

11. The humidifier (100) according to claim 9 or 10, further comprising at least one circumferential sealing element (76) for sealing at least part of the outer circumference (22) of the membrane media bellows (12) against a housing wall (116) of the housing (110).

12. The humidifier (100) according to any one of claims 9 to 11, further comprising potting material (120) arranged at a front side (118) inside the housing (110), the potting material (120) being for sealing at least one axial end (68, 70) of the membrane media bellows (12).

13. The humidifier (100) according to any one of claims 9 to 12, wherein the inlet (106) for the second fluid (82) and/or the outlet (108) for the second fluid (82) comprise a diffusor (122, 124).
